Europäisches Patentamt

European Patent Office

Office européen des brevets

(19)

(11) EP 0 486 996 B1

# (12) EUROPEAN PATENT SPECIFICATION

(45) Date of publication and mention
of the grant of the patent:
**17.01.1996 Bulletin 1996/03**

(51) Int Cl.⁶: **H02P 7/74**, B60L 3/10

(21) Application number: **91119649.1**

(22) Date of filing: **18.11.1991**

(54) **Control system for electric motor vehicle**

Steuerungssystem für mit Elektromotoren angetriebenes Fahrzeug

Système de commande pour un véhicule à moteurs électriques

(84) Designated Contracting States:
**DE FR**

(30) Priority: **19.11.1990 JP 313282/90**

(43) Date of publication of application:
**27.05.1992 Bulletin 1992/22**

(73) Proprietor: **KABUSHIKI KAISHA TOSHIBA**
**Kawasaki-shi, Kanagawa-ken 210, Tokyo (JP)**

(72) Inventors:
• **Kijima, Kenji**
**Fuchu-shi, Tokyo-to (JP)**

• **Noda, Tomofumi**
**Fuchu-shi, Tokyo-to (JP)**
• **Sueyoshi, Osamu**
**Suginami-ku, Tokyo-to (JP)**
• **Hatano, Michihiro**
**Urawa-shi, Saitama-ken (JP)**

(74) Representative: **Lehn, Werner, Dipl.-Ing. et al**
**D-81904 München (DE)**

(56) References cited:
**EP-A- 0 080 139** **DE-A- 3 608 603**
**DE-A- 3 737 633**

• **PATENT ABSTRACTS OF JAPAN vol. 8, no. 263**
**(M-342) 4 December 1984 & JP-A-59 136 004**
• **PATENT ABSTRACTS OF JAPAN vol. 6, no. 93**
**(M-133) 29 May 1982 & JP-A-57 028 503**

## Description

TECHNICAL FIELD OF THE INVENTION

This invention relates to a control system for an electric motor vehicle according to the preamble of claim 1 which is known from JP-A-59 136 004.

BACKGROUND ART

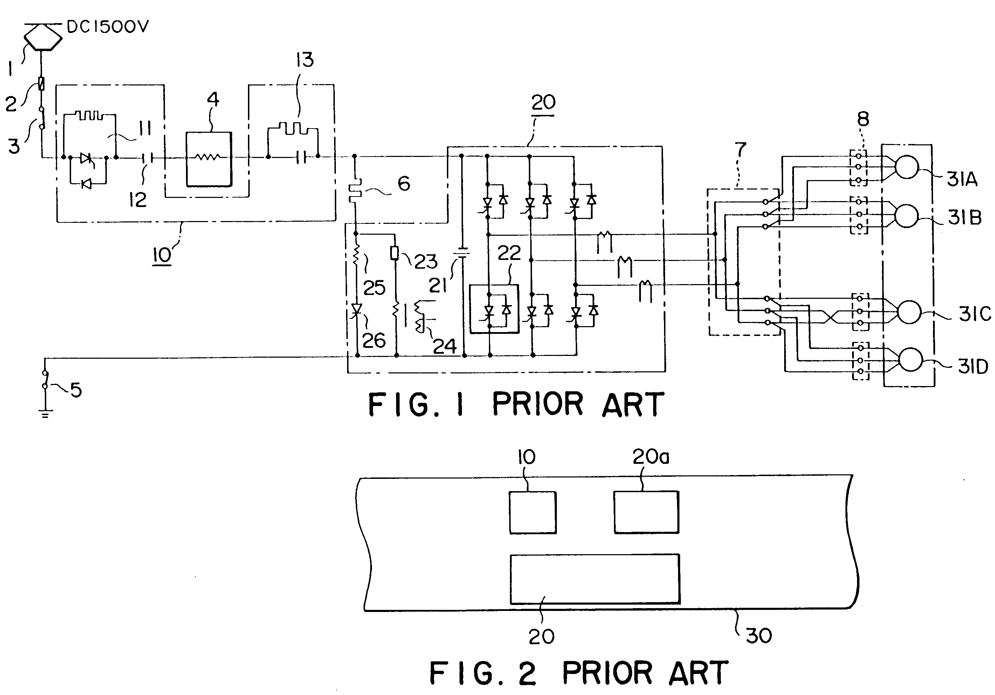

FIG. 1 is a circuit diagram showing the configuration of a conventional control system of this kind. In this figure, a current collected by a pantograph 1 is delivered, through a main fuse 2, a main switch 3, a filter reactor 4, and a line breaker 10, to a concentrated or centralized control inverter 20 of which negative side is grounded through a switch 5.

The line breaker 10 is composed of a current protection circuit 11 and a remote control switch 12 provided at the preceding stage of the filter reactor 4, and a rush current limiting circuit 13 provided at the succeeding stage of the filter reactor 4.

Furthermore, the concentrated control inverter 20 is composed of a filter capacitor 21 for smoothing a direct current (dc) voltage together with the filter reactor 4, a three-phase bridge connection circuit comprised of semiconductor switches 22 each having a free-wheeling diode, a series connection circuit comprised of a resistor 23 and a voltage detection circuit 24 for inputting a dc voltage through a current limiting resistor 6 to detect this voltage, and a series connection circuit comprised of a resistor 25 and a thyristor 26 for allowing a current to flow when an overvoltage is detected.

Here, the semiconductor switches 22 constituting the concentrated controlled inverter 20 are subjected to ON/OFF control by an inverter control circuit of which indication is omitted to output an ac of VVVF.

To the concentrated control inverter 20, four induction motors 31A to 31D are connected through a dividing box 7 and a connection box 8.

The line breaker 10, the concentrated control inverter 20 and an inverter control unit 20a described here are provided in parallel on the bottom surface of a vehicle body 30 as shown in FIG. 2.

However, since the conventional control system for an electric motor vehicle controls four induction motors 31A to 31D by using the single concentrated control inverter 20, switching elements of large capacity had to be used. Furthermore, respective motors could not be individually controlled, so it was difficult to increase the adhesion coefficient.

EP-A-0 080 139 discloses a method and device for controlling or regulating an axle torque of a vehicle particularly a rail vehicle dependent on wheel diameters. In particular, this document discloses a control unit for calculating a frequency instruction for a corresponding ac motor on the basis of a speed instruction for said vehicle and a diameter of the vehicle wheel connected to said corresponding ac motor to control said motor on the basis of the calculated frequency instruction.

JP-A-57 028 503 discloses an electric power transmission system of a locomotive.

The control system disclosed therein comprises slip frequency calculation means for correcting a slip frequency determined on the basis of a slip frequency pattern set in advance in accordance with the wheel diameters, thus to output a corrected frequency, and means for controlling said inverter main circuit so that the slip frequency provided by said slip frequency calculation means is realized.

SUMMARY OF THE INVENTION

This invention has been made in order to solve the above-mentioned problems, and its object is to provide a control system for an electric motor vehicle which can perform expected control by using semiconductor switching elements of small capacity, and can easily increase the adhesion coefficient of the vehicle wheel.

To achieve the above-mentioned object, in accordance with this invention, there is provided a control system for an electric motor vehicle of the initially defined type having the characterizing features of claim 1. Preferred embodiments are listed in the dependent claims.

The plurality of inverters include common control units at the preceding stages of the inverter control units, respectively. In addition, priority ranks are rendered in advance to the respective common control units. Thus, the common control unit of the highest priority rank can perform the linkage control function in preference to other common control units.

Furthermore, the control system according to this invention may comprise a plurality of ac motors for driving an electric motor vehicle, a plurality of inverters individually provided in association with the plurality of ac motors, respectively, first speed sensors for sensing respective rotation speeds of drive wheels of the vehicle driven by the plurality of motors, and a second sensor for sensing a rotation speed of any one of trailing wheels of the vehicle, wherein each of the plurality of inverters comprises slip frequency calculation means for calculating wheel diameters of respective drive wheels on the basis of detected outputs from the first and second sensors to calculate ratios between the calculated wheel diameters and a reference diameter set in advance, and to correct a slip frequency determined on the basis of a slip frequency pattern set in advance in accordance with the ratios determined by calculation, thus to output a corrected frequency, and means for controlling the inverter main circuit so that the slip frequency provided by the slip frequency calculation means is realized.

The slip frequency calculating means may serve to correct a slip frequency in dependency upon a deviation between an instruction value of a current for an ac motor and a detected value thereof.

Furthermore, the slip frequency calculation means may serve to correct a slip frequency in dependency upon an axle weight or axial load detected value of the drive axle so that the drive wheels driven by the ac motors are allowed to have a desired adhesion coefficient.

BRIEF DESCRIPTION OF THE DRAWINGS

In the accompanying drawings:

FIG. 1 is a circuit connection diagram of a conventional electric motor vehicle control system;
FIG. 2 is a bottom view of a vehicle body showing the arrangement state of main elements of the control system of FIG. 1;
FIG. 3 is a circuit connection diagram of an electric motor vehicle control system according to this invention;
FIG. 4 is a conceptual view showing the entire configuration of the control system of FIG. 3;
FIGS. 5(A), 5(B) and 5(C) are a front view, a side view, and a plan view showing the assembling state of the control system of FIG. 3, respectively;
FIGS. 6(A) and 6(B) are a front view and a side view showing the assembling state of the control system of FIG. 3, respectively;
FIGS. 7(A), (B) and (C) are bottom views of a vehicle body showing a different arrangement state of the control system of FIG. 3, respectively;
FIG. 8 is a block diagram showing an embodiment in which the adhesion control by the common control unit is carried out;
FIG. 9 is a view showing an arrangement state of speed sensors used in the case where the adhesion control is carried out;
FIG. 10 is a block diagram showing the detail of the inverter control unit in the case where the adhesion control is carried out every individual motors;
FIG. 11 is a block diagram showing the detail of the slip frequency calculation means in FIG. 10;
FIG. 12 is a view showing an example of the characteristic according to the embodiment of FIGS. 10 and 11;
FIG. 13 is a block diagram showing the detail of the inverter control unit according to another embodiment in the case where the adhesion control is carried out; and
FIG. 14 is a block diagram showing the detail of the inverter control unit according to a further embodiment in the case where the adhesion control is carried out.

EMBODIMENTS

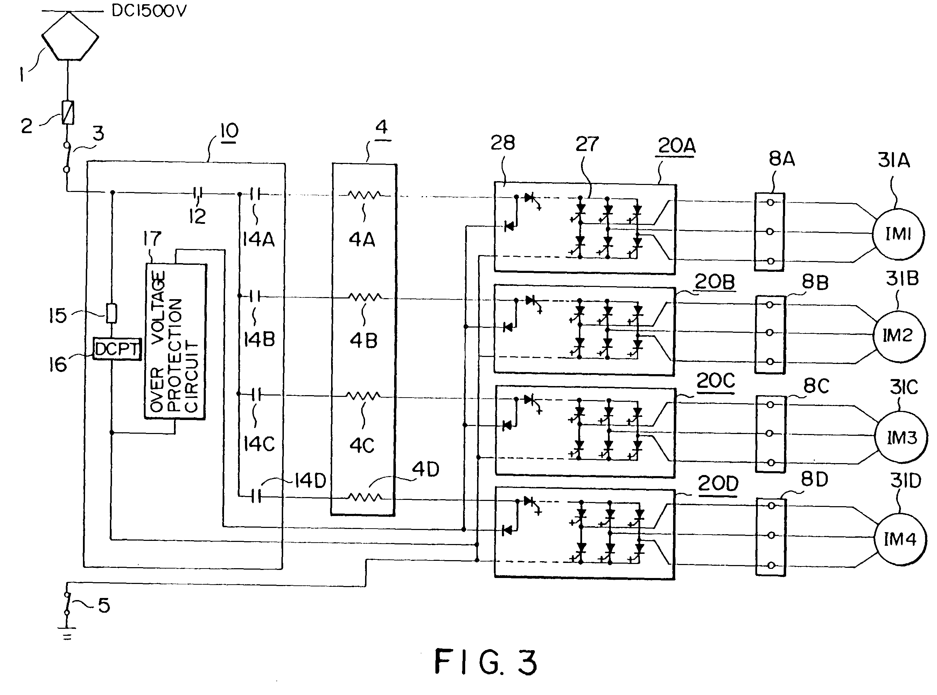

FIG. 3 is a circuit diagram showing the configuration of an embodiment according to this invention. In this figure, portions to which the same reference numerals as those in FIG. 1 are attached represent the same elements, respectively.

In this figure, at the succeeding stage of the main switch 3, a line breaker 10, a filter reactor 4 comprised of filter reactors 4A to 4D integrally provided, and individual inverters 20A to 20D are connected in order recited. To the output terminals of the individual inverters 20A to 20D, three-phase induction motors 31A to 31D are connected through connection boxes 8A to 8D, respectively.

More particularly, the line breaker 10 comprises a remote control switch 12 provided in the main circuit, contactors 14A to 14D provided in four branch circuits, a series circuit comprised of a resistor 15 and a voltage detector 16 for detecting a dc voltage, and an overvoltage protection circuit 17 for detecting an overvoltage on the basis of an output from the voltage detector 16 to allow respective input terminals of the individual inverters 20A to 20D to be grounded.

Furthermore, each of the individual inverters 20A to 20D comprises an inverter 27 including switching elements subjected to the three-phase bridge connection, and a protective circuit 28 comprised of a thyristor for controlling an input current and a diode for preventing reverse-current.

Here, respective inverter main circuits 27 are formed as a module every phases including free wheeling diodes, and the thyristors and the diodes constituting the respective protection circuits 28 are also formed as a module.

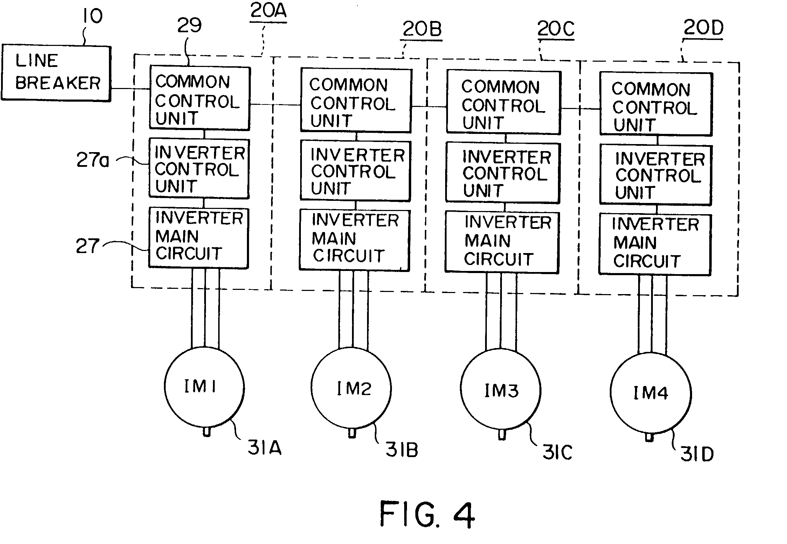

FIG. 4 is a block diagram showing the entire configuration of the individual inverters 20A to 20D. Each inverter comprises an inverter main circuit 27, an inverter control unit 27a for controlling this circuit, and a common control unit 29 having a function to give a speed instruction to the inverter control unit 27a, or the like functions. For example, the common control unit 29 determines by calculation a frequency instruction for the motor on the basis of a speed instruction for the vehicle and the diameter of the wheel directly connected to the motor to correct the frequency instruction thus determined so as to maintain the linkage with other motors to output a corrected frequency instruction.

Four sets of common control units belonging to four sets of individual inverters 20A, 20B, 20C and 20D are linked with each other. In accordance with a priority rank determined in advance, e.g., a priority rank determined in order of 20A, 20B, 20C and 20D, any one of the common control units, e.g., the common control unit of the individual inverter 20A performs the linkage control function as a main controller, and that common control unit controls speed of the induction motor 31A through the inverter control unit and the inverter main circuit in the system belonging to itself. In that case, three sets of common control units belonging to other individual inverters 20B, 20C and 20D serve as a sub-controller to control speed of the induction motors 31B, 31C and 31D through the inverter control units and the inverter main circuits in the systems belonging to themselves, respectively. If the common control unit having the first priority rank as the main controller is out of order, then the common control unit having the second priority rank immediately backs up the function of the main controller. Similarly, in accordance with the priority rank each time, any one of the common control units functions as a main controller.

The common control unit which has served as a main controller carries out transmission and reception of not only information of the system belonging to itself necessary for control but also various information between the above-mentioned common control unit functioning as the main controller and other common control units functioning as a sub-controller. Respective common control units are assumed to be able to perform not only collection/transmission of the above-mentioned information but also the following functions.

(a) To monitor the state of the inverter of the system belonging to itself to output an instruction to the peripheral equipments.

(b) To determine required quantities of an air braking of respective axles on the basis of a total quantity of braking quantities for which respective axles of the vehicle require and quantities of regenerative braking that respective inverters can output (braking control)

(c) In the case where any one of a plurality of individual inverters under the control of the common control units functioning as the main controller is out of order, an approach is employed to carry out regulation of the sharing load between respective systems so as to compensate by other inverters the power that the inverter out of order should share.

In the above-mentioned case, while there may be employed an arrangement such that the common control units functioning as a sub-controller are operative to receive a speed instruction from the main controller to carry out calculation of torque thus to output a frequency instruction on the basis of the calculated result, there may be employed an arrangement such that the common control unit functioning as the main controller carries out calculations of torques of the motors of the respective systems, and the common control units functioning as the sub-controller are operative to receive calculated results as output instructions from the main controller to carry out the inverter output control by using those output instructions.

In FIG. 4, for the brevity of illustration, an indication of the filter reactor 4 and the protective circuit 28 shown in FIG. 3 is omitted.

The operation of the control system shown in FIGS. 3 and 4 will now be described.

When the remote control switch 12 and the contactors 14A to 14D of the line breaker 10 are closed, a dc taken in by the pantograph 1 is delivered to the individual inverters 20A to 20D through four branch circuits of the filter reactors 4A to 4D. In the individual inverters 20A to 20D, the common control units 29 calculate frequency instructions of the three-phase induction motors 31A to 31D on the basis of a speed instruction for the vehicle and the diameters of the vehicle wheels directly connected to the three-phase induction motors 31A to 31D, and correct the frequency instructions thus obtained so that linkage with other motors is kept. Then, the inverter control circuits 27a carry out ON/OFF control of the switching elements constituting the inverter main circuits 27, respectively. As a result, alternating currents of voltages and frequencies corresponding to the frequency instructions outputted from the common control units 29 are delivered to the three-phase induction motors 31A to 31D. Thus, the electric motor vehicle is subjected to power running. At this time, a current during such a power running is limited by thyristors constituting the protection circuit 28.

On the other hand, at the time of the regenerative running of the electric motor vehicle, power is regenerated, so the dc voltage is elevated. At this time, the overvoltage protection circuit 17 detects an overvoltage on the basis of an output from the voltage detector 16 to allow the internal circuit (e.g., thyristor with series resistor) to conduct, thereby causing charges based on that overvoltage to be discharged through the diode constituting the protection circuit 28.

In such a control, the concerned common control unit 29 may carry out linkage control of the three-phase induction motors 31A to 31D in order to maintain the linkage with the common control units of other individual inverters.

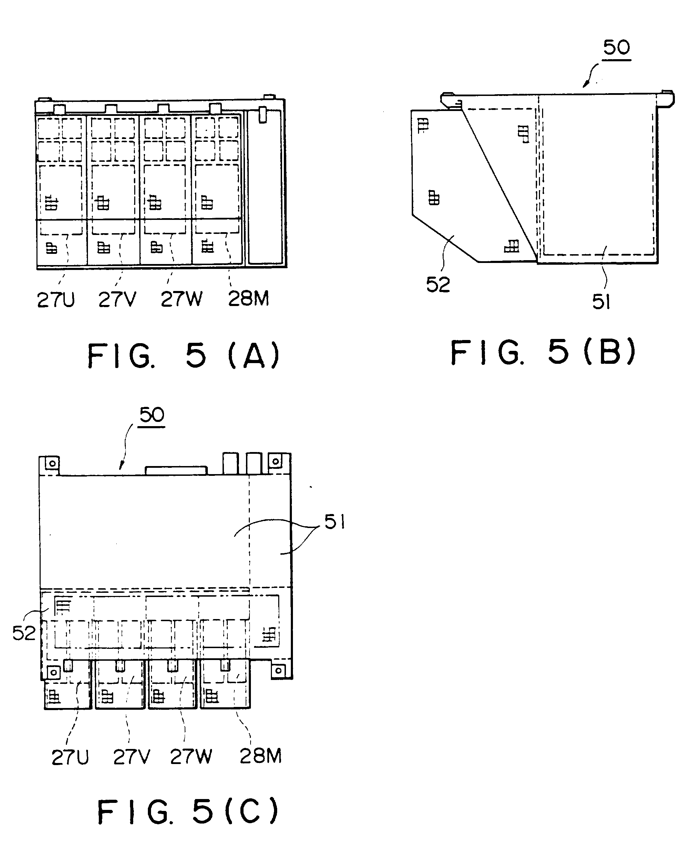

FIGS. 5(A) to 5(C) are views showing the assembling state of the individual inverters 20A to 20D. Here, housing 50 attached on the bottom portion of the vehicle body is provided with a closed portion 51 and an opened portion 52. Within the closed portion 51, the previously described inverter control unit 27a and the common control unit 29 are contained or accommodated. Furthermore, within the opened portion 52, inverter modules 27U, 27V and 27W every phases forming the inverter main circuit 27, and a breaker module 28M are contained. Thus, the inverter modules 27U, 27V and 27W and the breaker module 28M contained within the opened portion 52 can be subjected to cooling by wind produced in accordance with running of the vehicle.

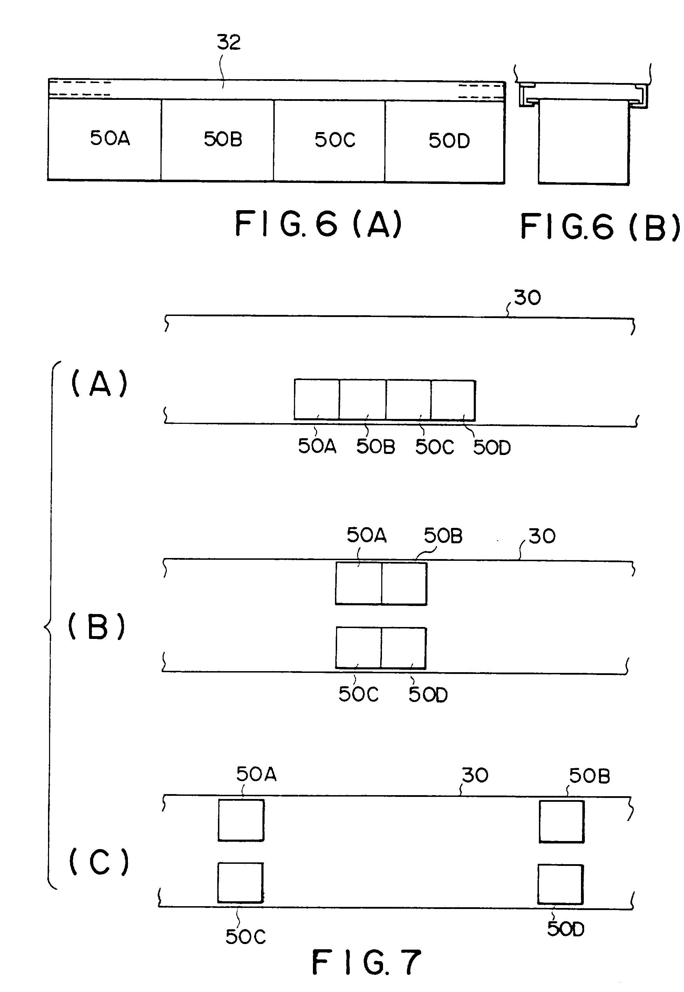

FIGS. 6(A) and 6(B) are a front view and a side view showing how housings 50A to 50D provided in correspondence with the three-phase induction motors 31A to 31D are attached onto the bottom portion of the vehicle body, respectively. In this case, the housings 50A to 50D are correctively fixed by means of the hanging frame 32, and the hanging frame 32 is attached to the bottom portion of the vehicle body. By employing a structure in which the housings are attached to the vehicle body through such a hanging frame 32, collective attachment can be carried out.

It is to be noted that there may be employed any one of a method of attaching the housings 50A to 50D in a row onto one side portion of the vehicle body 30 as shown in FIG. 7(A), a method of attaching them as a pair on the respective both side portions of the vehicle 30 as shown in FIG. 7(B), and a method of attaching them in a manner not only separated on the both sides but also spaced in forward and backward directions as shown in FIG. 7(C).

Meanwhile, this embodiment is directed to the case where four three-phase induction motors 31A to 31D are provided on a single vehicle. Since these motors have a capacity of 200 to 300 KW, switching elements used in the inverter main circuit corresponding to the above may be used. As a result, switching elements having a capacity of one-to-several percentage or ratio of that of the conventional system can be used.

Furthermore, since speeds of the vehicle wheels are individually controlled in this embodiment, an approach is employed to individually detect slipping of the driving wheels driven by the three-phase induction motors thus to carry out re-adhesion control. Thus, the adhesion coefficient can be substantially increased.

Furthermore, since the dc (direct current) is converted to ac (alternating current) of VVVF every motors by means of the individual inverters 20A to 20D in this embodiment, the merits or advantages described at the following items (a) to (d) are provided in addition to the above.

(a) Since heat generated is dispersed, cooling is easy.

(b) Since heat generated is dispersed, there is no local heating and there is less influence on the vehicle body.

(c) Degree of freedom of rigging or equipping is improved, so the space below the floor is effectively utilized and there results good weight balance.

(d) Wiring between motors and inverters at the portion below the floor of the vehicle body can be shortened.

(e) Circuits parts through which a large current flows are not required, so measure is easily taken for noise.

(f) Assembling and maintenance become simple. It is to be noted that while the outside dimensions of the filter reactor 4, the line breaker 10 and the housings 50A to 50D are not referred to in the above-described embodiment, if these outside dimensions are caused to be equal to each other, the degree of freedom is further improved.

In addition, while individual inverters are provided on respective motors in the above-described embodiment, two inverters connected in parallel to each other may be provided on each motor.

The case where the braking control is carried out by means of the common control units 29 will now be described.

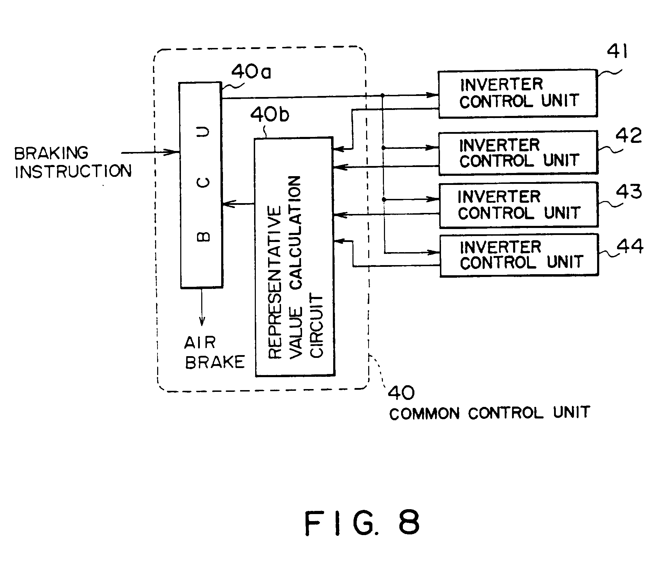

The braking system is of a structure as shown in the functional block diagram in FIG. 8 such that an electric brake by the inverter and an air brake are controlled by brake control unit (BCU) 40a. The BCU 40a has in advance, as a braking pattern, a ratio between an electric braking quantity by the inverter and an air braking quantity at respective speeds. This pattern is prepared so as to ordinarily effectively utilize the electric braking at the maximum to regenerate the maximum power, and to additionally utilize the air braking.

In the case where a braking instruction is inputted from a master controller of the vehicle, the BCU 40a sends an electric braking pattern to each of inverter control units 41, 42, 43 and 44 for respective inverters. The inverter control units 41 to 44 receives this electric braking pattern as an electric braking pattern $B_{FCR}$ to control the motors 31A to 31D by using, as a motor current instruction value $I_{MR}$, a current value calculated by the following equation on the basis of the electric braking instruction:

$$I_{MR} = K_1 \times B_{FCR} \times (F/V) \qquad (1)$$

where $K_1$ is a constant, F is a motor frequency, and V is a motor voltage.

However, since there is a limit in the regenerative power which can be returned to a trolley wire, it cannot be said that the maximum electric braking can be used at all times. In such a case, a measure must be taken to calculate an electric braking quantity actually produced to compensate a shortage for the instruction value.

In view of this, the inverter control units 41 to 44 of the respective inverters calculate electric braking quantities $B_{FC}$ actually produced on the basis of actual current values $I_M$, and voltages V and frequencies F of motors of systems belonging to themselves, in accordance with the following equation to send them to a representative value calculation unit 40b:

$$B_{FC} = K_2 \times I_M \times (F/V) \qquad (2)$$

where $K_2$ is a constant.

The representative value calculation unit 40b calculates a representative value, e.g., the maximum value or the mean value of an electric braking quantity actually produced at the respective inverters to feed it back to the BCU 40a. The BCU 40a compares the value thus fed back with an electric braking instruction value to compensate the shortage by increasing an air braking quantity.

The adhesion control carried out in relation to this invention will now be described.

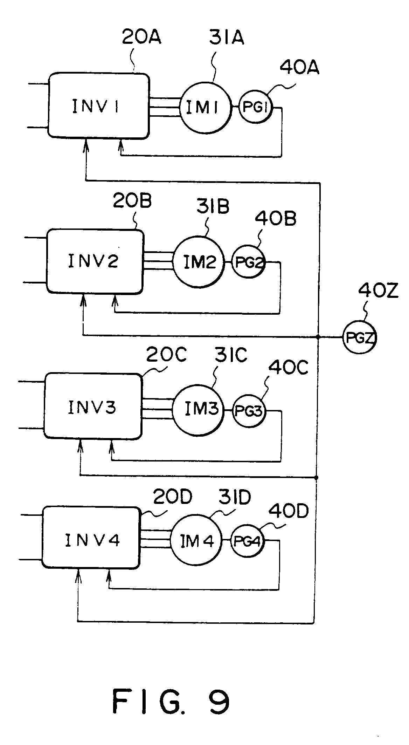

FIG. 9 is a block diagram showing an arrangement of speed sensors provided for the adhesion control. Speed sensors (PG) 40A, 40B, 40C and 40D (first speed sensors) are attached on the respective drive wheels, and respective detected signals therefrom are sent to inverters 20A, 20B, 20C and 20D. In the arrangement of this figure, a second speed sensor 40Z is provided on any one of trailing wheels, and a detected signal therefrom is also sent to the respective inverters 20A to 20D.

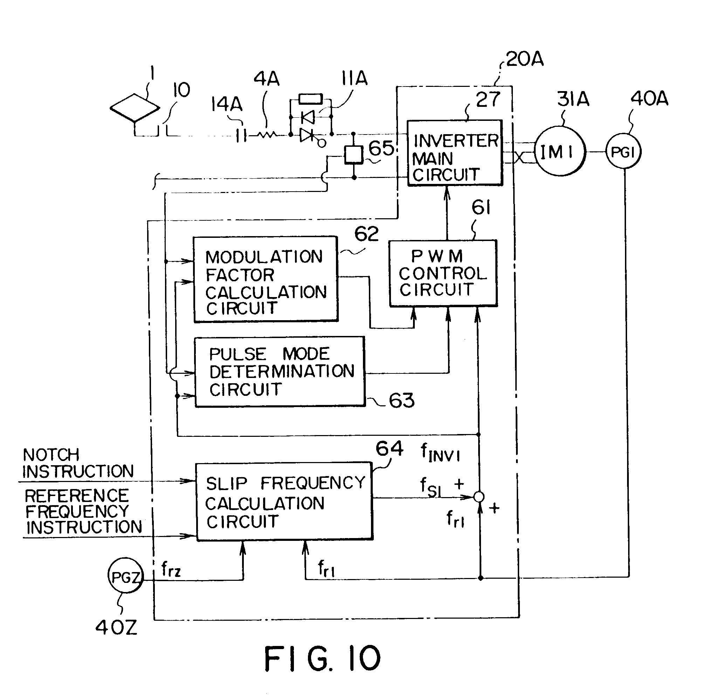

FIG. 10 is a block diagram showing the internal configuration of the inverter 20A of these inverters in FIG. 9. Since the configurations of other inverters 20B to 20D are the same as that of the inverter 20A, their illustration is omitted. As shown in FIG. 10, the inverter 20A comprises, in addition to the inverter main circuit 27, an inverter control unit including a PWM control circuit 61, a modulation factor calculation circuit 62, a pulse mode determination circuit 63, and a slip frequency calculation circuit 64. Furthermore, detected signals $f_{rl}$ and $f_{rz}$ from the speed sensors 40A and 40Z are inputted to the slip frequency calculation circuit 64. In addition, an input voltage $V_c$ of the inverter 20A is detected by a voltage detector 65, and a detected signal thereof is inputted to the modulation factor calculation circuit 62 and the pulse mode determination circuit 63. Here, the modulation factor calculation circuit 62 is a circuit for sending a modulation factor corresponding to the value of a frequency signal $f_{INVI}$ to the PWM control circuit 61 while monitoring the input voltage $V_c$. Furthermore, the pulse mode determination circuit 63 is a circuit in which the input voltage $V_c$ is used for adjustment of switching timing to determine the pulse mode in dependency upon the value of the $f_{INVI}$. In addition, the PWM control circuit 61 outputs a PWM control instruction signal to the inverter main circuit 27 on the basis of signals from the modulation factor calculation circuit 62 and the pulse mode determination circuit 63, and the frequency signal $f_{INV1}$.

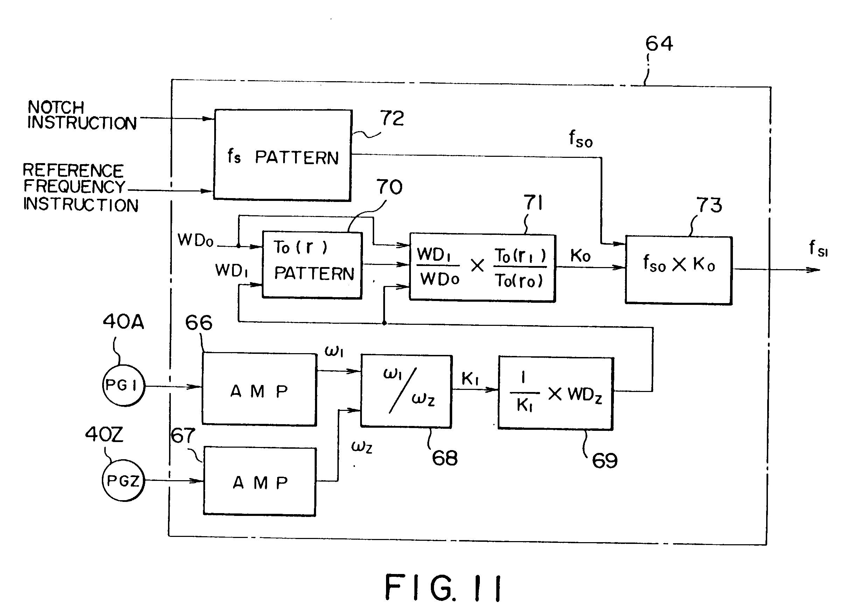

FIG. 11 is a block diagram showing the internal configuration of the slip frequency calculation circuit 64 in FIG. 10. In this figure, detected signals from the speed sensors 40A and 40Z are respectively inputted to amplifiers 66 and 67, and a rotation speed $\omega_1$ of the drive wheel of the first axle and a rotation speed $\omega_z$ of the trailing wheel are outputted from these amplifiers. A rotation speed ratio calculation circuit 68 calculates a rotation speed ratio $K_1 (= \omega_1/\omega_z)$ of these vehicle wheels to send the calculated result ($K_1$) to a wheel diameter calculation circuit 69. The wheel diameter calculation circuit 69 calculates a wheel diameter $WD_1$ of the drive wheel of the first axle from the rotation frequency ratio $K_1$ and the wheel diameter WD of the trailing wheel. An axle torque pattern circuit 70 outputs signals indicative of an axle torque $T_{0(rl)}$ corresponding to the wheel diameter $WD_1$, and an axle torque $T_{0(r0)}$ corresponding to a virtual reference wheel diameter $WD_0$. It is to be noted that the characteristic curve indicating the relationship between such a wheel diameter and an axle torque corresponding thereto assumed to be known in advance by an experiment, etc.

A correction coefficient calculation circuit 71 calculates a correction coefficient $K_0$ from the axle torques $T_{0(r0)}$ and $T_{0(rl)}$ and the wheel diameters $WD_0$ and $WD_1$ by the following equation:

$$K_0 = (WD_1/WD_0) \times (T_{0(rl)}/T_{0(r0)})$$

On the other hand, a $f_s$ pattern circuit 72 inputs a notch instruction and a reference frequency instruction to send a reference slip frequency $f_{s0}$ for the reference wheel diameter $WD_0$ every notches to the pattern value correction circuit 73. The pattern value correction circuit 73 determines a slip frequency $f_{sl}$ for the drive wheel of the first axle by multiplying the reference frequency $f_{s0}$ by a correction coefficient $K_0$ to output the slip frequency $f_{sl}$ thus obtained.

The PWM control circuit 61 in FIG. 10 carries out PWM control by using a frequency $f_{invl}$ obtained by adding the slip frequency $f_{sl}$ thus calculated and a rotor frequency $f_{rl}$ from the speed sensor 60A as an inverter output frequency instruction for the drive wheel of the first axle. Thus, control can be carried out such that the tread torque $T_{pl}$ of the drive wheel of the first axle takes a predetermined value.

While the operation of the inverter 20A for controlling the drive wheel of the first axle has been described above, the inverters 20B to 20D for controlling the drive wheels of the second to fourth axles carry out operations similar to the above.

As stated above, by individually driving the drive wheels of the first to fourth axles by means of motors 31A to 31D, and adjusting slip frequencies $f_{sl}$ to $f_{s4}$ of the inverters 20A to 20D in dependency upon differences between wheel diameters of the respective drive wheels, it is possible to carry out a control such that tread torques $T_{pl}$ to $T_{p4}$ on the respective axles take predetermined values (e.g. values equal to each other). Namely, in a train in which a plurality of vehicles are coupled, if there is caused to be produced no difference between tread torques, i.e., tractive forces of respective vehicles, there can result the state where no pushing/pulling force is produced in the coupler. Accordingly, it is possible to improve comfortability significant for a passenger train, etc. without control of the wheel diameter.

Furthermore, by altering respective patterns of the axle torque pattern circuit 70 and $f_s$ the pattern circuit 72 of the frequency calculation circuit 64 in FIG. 11 to patterns in which an expected adhesion coefficient is taken into consideration, the above-mentioned problem of difference between tread torques can be eliminated. When viewed from a practical point of view, the mean adhesion coefficient $\mu_A$ of the first to fourth axles in the case of driving four motors by a single inverter was about 18%, whereas, in accordance with the system of this embodiment, the adhesion coefficients of the respective axles can be elevated to the levels of expected adhesion coefficients of the respective axles, so the value of mean adhesion coefficient $\mu_A$ can be improved to about 23%.

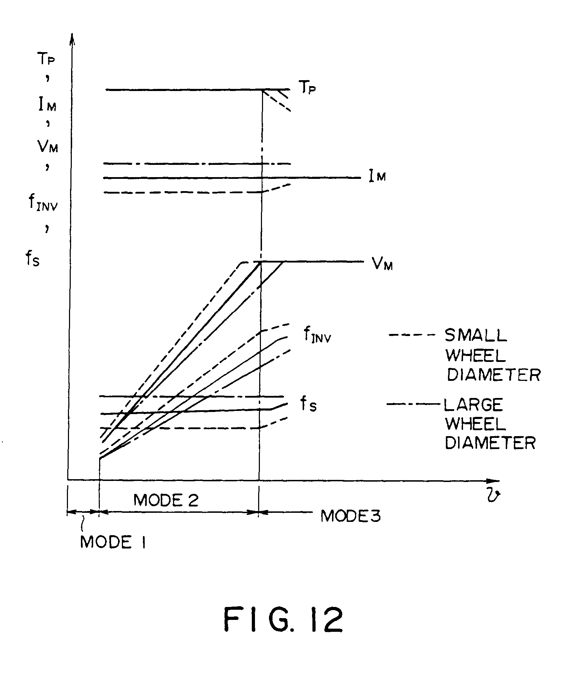

FIG. 12 is a characteristic diagram obtained when power running is carried out with respect to an electric motor vehicle control system constructed as shown in FIGS. 9 to 11, wherein $I_M$ is a motor current, $V_M$ is a motor voltage, and v is a vehicle speed. As shown in this figure, the value of the tread torque $T_p$ is caused to be in a flat state, i.e., take a constant value during the mode 2. Furthermore, respective parameters are caused to take different values in dependency upon the magnitude of the wheel diameter. It is to be noted that since the tread torque $T_P$ is determined by the vehicle radius $r_l$ and the axle torque $T_{0(r)}$ expressed as a function of the radius r, i.e., is expressed by $T_P = K \times T_{0(r)}/r$ (K is a constant), the magnitude relationship of the respective parameters corresponding to the magnitude relationship of the wheel diameters is not necessarily as shown.

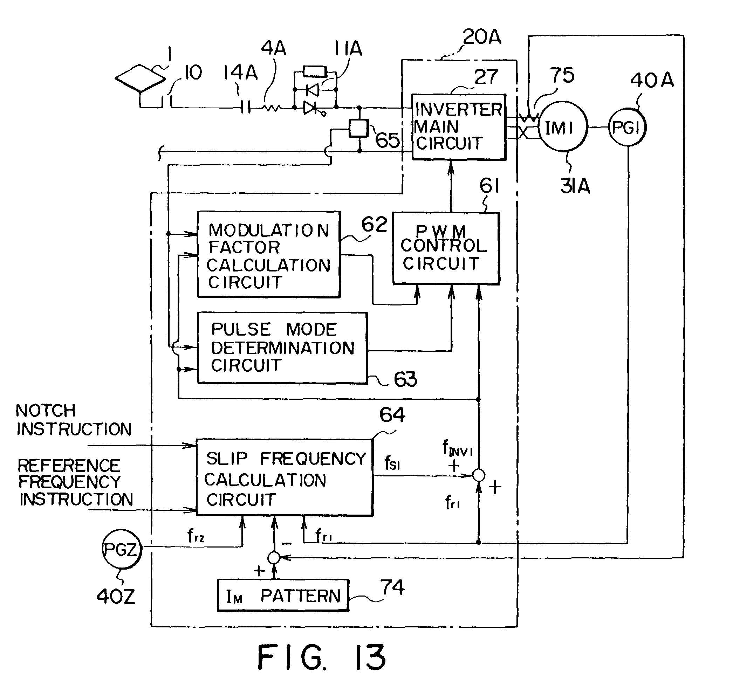

FIG. 13 is a block diagram showing a portion of a further embodiment, which corresponds to the configuration in FIG. 10. Namely, inverter 20A in FIG. 13 has an arrangement such that a $I_M$ pattern circuit 74 is added to the inverter 20A in FIG. 10. In addition, a current detector 75 for detecting a motor current In is provided at the input terminal of the drive motor 31A, and a deviation between a detected value of the motor current $I_M$ and an output from the $I_M$ pattern circuit 74 is inputted to the slip frequency calculation circuit 64. Thus, the slip frequency calculation circuit 64 further makes a correction of a slip frequency calculated by the slip frequency calculation circuit 64 shown in FIG. 11 on the basis of the above deviation.

In accordance with the configuration of FIG. 13, the reliability with respect to the slip frequency $f_{sl}$ outputted from the slip frequency calculation circuit 64 can be further improved. Namely, in accordance with the characteristic diagram of FIG. 12, a difference between wheel diameters of respective drive axles appears as a difference of the level of the motor current $I_M$. Accordingly, since the wheel diameter can be conversely estimated from a detected value of the motor current $I_M$, a correction in which that detected value is taken into consideration is made, thereby making it possible to improve the reliability of the slip frequency $f_{sl}$.

By employing the embodiments of FIGS 10 and 13, it is possible to eliminate the problems of unbalance of the adhesion torque or the adhesion coefficient produced in the conventional system due to the difference between the wheel diameters of respective drive axles.

Meanwhile, in the embodiments of FIGS. 10 and 13, on the assumption that the axle weights of respective drive axles are equal to each other, any attention is not drawn to the magnitude of these axle weights or the difference of the distribution state, etc. However, there are instances where any great difference may be produced between axle weights of respective drive axles due to changes in the axle weight at the time of acceleration or deceleration running and/or shift of the axle weight position at the time of running on the slope. In the case where there is produced any great difference between the axle weights of the respective drive axles as stated above, it is impossible to obtain a desired adhesion coefficient by the correction of the slip frequency in which only the difference between respective wheel diameters is considered into account.

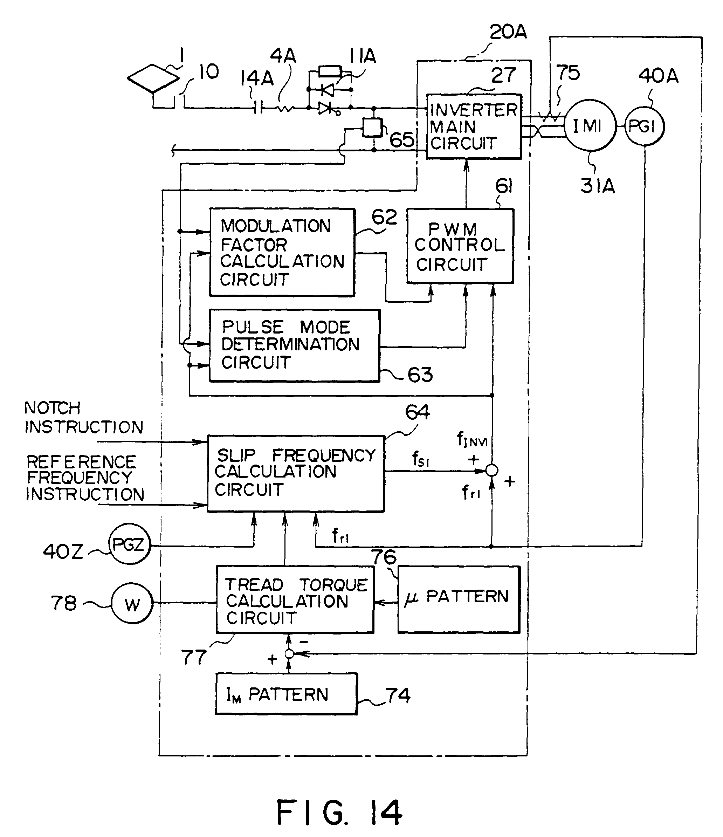

In view of this, in the embodiment shown in FIG. 14, calculation of the slip frequency in which not only the difference between wheel diameters of the drive axles but also the difference between the axle weights of respective axles are taken into consideration is carried out. The inverter 20A in FIG. 14 has a configuration such that a μ pattern circuit 76 and a tread torque calculation circuit 77 are added to the inverter in FIG. 13. Furthermore, an axle weight detector (W) 78 is attached onto the drive axle. The tread torque calculation circuit 77 calculates the value $T_{pl}$ of a corresponding tread torque from an axle weight detected value $W_1$ from the weight detector 78 and an adhesion coefficient $\mu_1$ (it is preferable to set this adhesion coefficient to a value close to the level of an expected adhesion coefficient) from the μ pattern circuit 76 to send it to the frequency calculation circuit 64. The slip frequency calculation circuit 64 calculates a slip frequency $f_{s10}$ corresponding to this tread torque $T_{pl}$, and further calculates an optimum slip frequency $f_{sl}$ corresponding to the wheel diameter of the first axle on the basis of the slip frequency $f_{s10}$.

In accordance with the embodiment of FIG. 14, even in the case where not only the wheel diameter of respective drive axles are different, but also the axle weights thereof are different, it is possible to effect a control such that the adhesion coefficient becomes equal to a desired value at all times.

It is to be noted that the embodiment of FIG. 14 contemplates eliminating the state where the levels of the adhesion coefficients with respect to all the drive axles are not necessarily sufficiently high, but has not direct relevancy to elimination of the problem that it is required to improve accuracy of the tread torque control in order to eliminate pushing and pulling action of the coupler between vehicles.

In accordance with this invention, the following secondary merits or advantages are provided in addition to the above-mentioned merits.

(1) In the conventional system in which a plurality of motors are driven by a single inverter, it was required to carefully carry out control of the wheel diameter in order to allow the difference between magnitudes of wheel diameters of respective drive axles to be held down to a predetermined value. On the contrary, by using the system according to this invention, it becomes unnecessary to carry out such a control of the wheel diameter.

(2) In the conventional system in which a plurality of motors are driven by a single inverter, in order to reduce a quantity of unbalance of the axle torque due to the difference between the magnitudes of vehicle wheel diameters of respective drive axles, it was required to allow the rated slip of the induction motor used for the drive motor to take a large value (about 3%). On the contrary, by employing the configuration that respective drive axles are individually controlled, the rated slip can be reduced to a small value of about 1.5%. Accordingly, efficient, small-sized and light-weight induction motor can be employed.

(3) By employing the configuration that respective drive axles are individually controlled, even in the event that a slipping takes place in any drive axle for any reason, control of the inverter frequency can be conducted with respect to that drive axle in correspondence with the degree of the slipping. As a result, the change in the tractive force of the entirety of the vehicle can be minimized. For this reason, speed can be prevented from suddenly changing.

## Claims

1. A control system for an electric motor vehicle including:

   a plurality of alternating current (ac) motors (31A,31B,31C,31D) for driving an electric motor vehicle; and

   a plurality of inverters (20A,20B,20C,20D) individually provided in association with said plurality of the induction motors, respectively;

   wherein each of said plurality of inverters comprises an inverter main circuit (27) for delivering an ac of Variable-Voltage and Variable-Frequency (VVVF) to a corresponding motor

   characterized by

   an inverter control unit (27a) for calculating a frequency instruction for said corresponding ac motor on the basis of a speed instruction for said vehicle and a diameter of the vehicle wheel connected to said corresponding ac motor to control said inverter main circuit on the basis of the calculated frequency instruction, wherein said plurality of inverters include common control units (29) at the preceding stages of said inverter control units, respectively, and wherein priority ranks are rendered in advance to said respective common control units, the common control unit of the highest priority rank being capable of performing the linkage control function in preference to other common control units.

2. A control system for an electric motor vehicle as set forth in claim 1, wherein each of said common control units comprises a memory unit in which a ratio between an electric brake and an air brake is stored in advance as a braking pattern in correspondence with a vehicle speed, whereby when said common control unit of said highest priority rank receives a braking instruction, said common control unit instructs an electric braking quantity corresponding to a vehicle speed at the time of reception with respect to said respective plurality of inverters in accordance with the memory content of said memory unit, and produces an air braking instruction for supplementing a shortage of said electric braking quantity while keeping the linkage of the entirety of the vehicle.

3. A control system for an electric motor vehicle as set forth in claim 1, which further comprises means (40A,40B,40C,40D,40Z) for detecting slipping states of respective drive wheels driven by said plurality of ac motors, whereby said common control units (29) carry out adhesion control on the basis of the slipping states of said respective drive wheels detected by said means for detecting slipping state.

4. A control system for an electric motor vehicle according to claim 3, further comprising:

   first speed sensors (40A,40B,40C,40D) for detecting rotation speeds of respective drive wheels of said vehicle driven by said plurality of ac motors;

   a second sensor (40z) for detecting a rotation speed of any trailing wheel of said vehicle;

   slip frequency calculation means (64) for calculating wheel diameters of respective drive wheels on the basis of detected outputs from said first and second sensors to calculate ratios between the calculated wheel diameters and a reference diameter set in advance, and to correct a slip frequency determined on the basis of a slip frequency pattern set in advance in accordance with the ratios determined by calculation, thus to output a corrected frequency; and

   means (61,62,63) for controlling said inverter main circuit (27) so that the slip frequency provided by said slip frequency calculation means (64) is realized.

5. A control system for an electric motor vehicle as set forth in claim 4, wherein said slip frequency calculating means (64) corrects said slip frequency in dependency upon a deviation between an instruction value of a current for the ac motor and a detected value thereof.

6. A control system for an electric motor vehicle as set forth in claim 4 or 5, wherein said slip frequency calculation means (64) corrects said slip frequency in dependency upon an axle weight or axial load detected value of the drive axle so that the drive wheels driven by said ac motors are allowed to have a desired adhesion coefficient.

## Patentansprüche

1. Steuersystem für ein Elektromotorfahrzeug, beinhaltend:

   eine Vielzahl von Wechselstrom(AC)-Motoren (31B, 31B, 31C, 31D) zum Antreiben eines Elektromotorfahrzeuges; und

   eine Vielzahl von Invertern (20A, 20B, 20C, 20D), individuell vorgesehen in Zusammenhang mit der Vielzahl der Induktionsmotoren;

wobei jeder der Vielzahl von Invertern eine Inverterhauptschaltung (27) zum Liefern eines AC einer variablen Spannung und variablen Frequenz (VVVF) an einen entsprechenden Motor umfaßt;

**gekennzeichnet** durch

eine Invertersteuereinheit (27a) zum Berechnen einer Frequenzanweisung für den entsprechenden AC-Motor auf der Basis einer Geschwindigkeitsanweisung für das Fahrzeug und eines Durchmessers des Fahrzeugrades, das verbunden ist mit dem entsprechenden AC-Motor, zum Steuern der Inverterhauptschaltung auf der Basis der berechneten Frequenzanweisung, wobei die Vielzahl von Invertern gemeinsame Steuereinheiten (29) an den vorhergehenden Stufen der Invertersteuereinheiten beinhaltet, und wobei Prioritätsränge aufgestellt sind im voraus für jeweilige gemeinsame Steuereinheiten, wobei die gemeinsame Steuereinheit des höchsten Prioritätsranges in der Lage ist, die verbindungssteuerfunktion präferentiell vor weiteren gemeinsamen Steuereinheiten durchzuführen.

2. Steuersystem für ein Elektromotorfahrzeug nach Anspruch 1, dadurch gekennzeichnet, daß jede der gemeinsamen Steuereinheiten eine Speichereinheit umfaßt, in der ein Verhältnis zwischen einer elektrischen Bremse und einer Luftbremse im voraus gespeichert ist als ein Bremsmuster in Übereinstimmung mit einer Fahrzeuggeschwindigkeit, wodurch, wenn die gemeinsame Störeinheit des höchsten Prioritätsranges eine Bremsanweisung empfängt, die gemeinsame Steuereinheit eine elektrische Bremsgröße entsprechend einer Fahrzeuggeschwindigkeit zur Zeit des Empfangs bezüglich der jeweiligen Vielzahl von Invertern in Übereinstimmung mit dem Speicherinhalt der Speichereinheit instruiert, und eine Luftbremsansweisung zum Verhindern eines Kurzschlusses der elektrischen Bremsgröße und Aufrechterhalten der Verbindung der Gesamtheit des Fahrzeuges erzeugt.

3. Steuersystem für ein Elektromotorfahrzeug nach Anspruch 1, gekennzeichnet durch eine Eirichtung (40A, 40B, 40C, 40D, 40Z) zum Erfassen von Rutschzuständen der jeweiligen Antriebsräder, die angetrieben werden durch die Vielzahl von AC-Motoren, wodurch die gemeinsamen Steuereinheiten (29) eine Adhäsionssteuerung auf der Basis der Rutschzustände der jeweiligen Antriebsräder, erfaßt durch die Einrichtung zum Erfassen eines Rutschzustandes, ausführen.

4. Steuersystem für ein Elektromotorfahrzeug nach Anspruch 3, gekennzeichnet durch:

erste Geschwindigkeitssensoren (40A, 40B, 40C, 40D) zum Erfassen von Drehgeschwindigkeiten jeweiliger Antriebsräder des Fahrzeuges, die angetrieben werden durch die Vielzahl von AC-Motoren;

einen zweiten Sensor (40z) zum Erfassen einer Drehgeschwindigkeit irgendeines Nachlaufrades des Fahrzeuges;

eine Rutschfrequenz-Berechnungseinrichtung (64) zum Berechnen von Raddurchmessern jeweiliger Antriebsräder auf der Basis der erfaßten Ausgaben von den ersten und zweiten Sensoren zum Berechnen von Verhältnissen zwischen den berechneten Raddurchmessern und einem Referenzdurchmesser, der im voraus eingestellt ist, und zum Korrigieren einer Rutschfrequenz, die bestimmt ist auf der Basis eines im voraus eingestellten Rutschfrequenzmusters in Übereinstimmung mit den Verhältnissen, die durch die Berechnung bestimmt werden, um somit eine korrigierte Frequenz auszugeben; und

eine Einrichtung (61, 62, 63) zum Steuern einer Inverterhauptschaltung (27), so daß die Rutschfrequenz, die vorgesehen ist durch die Rutschfrequenz-Berechnungseinrichtung (64), realisiert wird.

5. Steuersystem für ein Elektromotorfahrzeug nach Anspruch 4, dadurch gekennzeichnet, daß die Rutschfrequenz-Berechnungseinrichtung (64) die Rutschfrequenz in Abhängigkeit von einer Abweichung zwischen einem Anweisungswert eines Stroms für den AC-Motor und einen erfaßten Wert davon korrigiert.

6. Steuersystem für ein Elektromotorfahrzeug nach Anspruch 4 oder 5, dadurch gekennzeichnet, daß die Rutschfrequenz-Berechnungseinrichtung (64) die Rutschfrequenz in Abhängigkeit von einem Achsengewicht oder einem Achsenlast-Erfassungswert der Antriebsachsen korrigiert, so daß die Antriebsräder, die durch die AC-Motoren angetrieben werden, einen erwünschten Adhäsionskoeffizienten haben können.

**Revendications**

1. Système de commande pour un véhicule à moteurs électriques comprenant :

> plusieurs moteurs à courant alternatif (c.a.) (31A, 31B, 31C, 31D) pour commander un véhicule à moteurs électriques ; et
> plusieurs onduleurs (20A, 20B, 20C, 20D) fournis individuellement, respectivement en association avec plusieurs desdits moteurs à induction ou asynchrones; dans lequel chacun de ladite pluralité d'onduleurs comprend un circuit principal d'onduleurs (27) pour fournir à un moteur correspondant un courant alternatif de tension variable et de fréquence variable (VVVF)
> caractérisé par
> une unité de commande d'onduleurs (27a) servant à calculer une instruction de fréquence pour ledit moteur correspondant à courant alternatif, sur la base d'une instruction de vitesse pour ledit véhicule, et à calculer un diamètre de la roue du véhicule reliée audit moteur correspondant à courant alternatif pour commander ledit circuit principal d'onduleurs sur la base de l'instruction de fréquence calculée, système dans lequel ladite pluralité d'onduleurs comprend, respectivement, des unités de commande communes (29) aux phases précédentes desdites unités de commande d'onduleurs, et dans lequel des rangs de priorité sont donnés à l'avance auxdites unités respectives de commande communes, l'unité de commande commune du rang de priorité le plus élevé étant capable de réaliser la fonction de commande de transmission de préférence à d'autres unités de commande communes.

2. Système de commande pour un véhicule à moteurs électriques comme exposé dans la revendication 1, dans lequel chacune desdites unités de commande communes comprend une unité mémoire dans laquelle un rapport entre un frein électrique et un frein à air est stocké à l'avance comme un modèle de freinage en correspondance avec une vitesse du véhicule, de sorte que lorsque ladite unité de commande commune dudit rang de priorité le plus élevé reçoit une instruction de freinage, ladite unité de commande commune ordonne une quantité de freinage électrique correspondant à une vitesse du véhicule au moment de la réception, par rapport à ladite pluralité respective d'onduleurs en accord avec le contenu de mémoire de ladite unité de mémoire, et produit une instruction de freinage à air pour compléter une insuffisance de ladite quantité de freinage électrique tout en conservant la transmission de la totalité du véhicule.

3. Système de commande pour un véhicule à moteurs électriques comme exposé dans la revendication 1, qui comprend en outre des moyens (40A, 40B, 40C, 40D, 40Z) servant à détecter des états de glissement des roues motrices respectives entraînées par ladite pluralité de moteurs à courant alternatif, de sorte que lesdites unités de commande communes (29) effectuent la commande d'adhérence sur la base des états de glissement desdites roues motrices respectives, détectés par lesdits moyens de détection de l'état de glissement.

4. Système de commande pour un véhicule à moteurs électriques selon la revendication 3, comprenant en outre :

> des premiers capteurs de vitesses (40A, 40B, 40C, 40D) servant à détecter les vitesses de rotation des roues motrices respectives dudit véhicule commandé par ladite pluralité de moteurs à courant alternatif;
> un second capteur (40Z) servant à détecter une vitesse de rotation de n'importe quelle roue porteuse dudit véhicule ;
> un moyen (64) de calcul de la fréquence de glissement servant à calculer les diamètres des roues motrices respectives sur la base de sorties détectées à partir des premiers capteurs et du second capteur afin de calculer des rapports entre les diamètres de roue calculés et un diamètre de référence défini à l'avance, et servant à corriger une fréquence de glissement déterminée sur la base d'un type de fréquence de glissement défini à l'avance en conformité avec les rapports déterminés par calcul, pour fournir ainsi une fréquence corrigée ; et
> des moyens (61, 62, 63) servant à commander ledit circuit principal d'onduleurs (27), de sorte que la fréquence de glissement fournie par ledit moyen (64) de calcul de la fréquence de glissement est obtenue.

5. Système de commande pour un véhicule à moteurs électriques comme exposé dans la revendication 4, dans lequel ledit moyen (64) de calcul de la fréquence de glissement corrige ladite fréquence de glissement en fonction d'un écart entre une valeur d'instruction d'un courant pour le moteur à courant alternatif et une valeur détectée de ce courant.

6. Système de commande pour un véhicule à moteurs électriques comme exposé dans la revendication 4 ou 5, dans lequel ledit moyen (64) de calcul de la fréquence de glissement corrige ladite fréquence de glissement en fonction d'une valeur détectée de poids sur l'essieu ou de charge axiale de l'essieu moteur, de sorte que les roues motrices entraînées par lesdits moteurs à courant alternatif peuvent avoir le coefficient d'adhérence souhaité.

FIG. 1 PRIOR ART

DC1500V

FIG. 2 PRIOR ART

FIG. 3

DC1500V

OVER VOLTAGE PROTECTION CIRCUIT

DCPT

EP 0 486 996 B1

FIG. 4

LINE BREAKER (10)

29 — COMMON CONTROL UNIT
20A, 20B, 20C, 20D
27a — INVERTER CONTROL UNIT
27 — INVERTER MAIN CIRCUIT

COMMON CONTROL UNIT (×4)
INVERTER CONTROL UNIT (×4)
INVERTER MAIN CIRCUIT (×4)

IM1  IM2  IM3  IM4

31A  31B  31C  31D

EP 0 486 996 B1

50

27U 27V 27W 28M

FIG. 5 (A)

FIG. 5 (B)

52

51

50

51

52

27U 27V 27W 28M

FIG. 5 (C)

32

| 50A | 50B | 50C | 50D |

FIG. 6 (A)          FIG. 6 (B)

30

(A)

50A   50B   50C   50D

50A        50B        30

(B)

50C        50D

50A            30            50B

(C)

50C                          50D

FIG. 7

FIG. 8

# FIG. 9

EP 0 486 996 B1

FIG. 10

NOTCH
INSTRUCTION

REFERENCE
FREQUENCY
INSTRUCTION

64

72
$f_s$ PATTERN

$f_{so}$

70
$WD_0$
$WD_1$
$T_0(r)$ PATTERN

71
$\dfrac{WD_1}{WD_0} \times \dfrac{T_0(r_1)}{T_0(r_0)}$

$K_0$

73
$f_{so} \times K_0$

$f_{si}$

40A
66
PG1
A M P
$\omega_1$

68
$\dfrac{\omega_1}{\omega_z}$
$K_1$

69
$\dfrac{1}{K_1} \times WD_z$

40Z
67
PGZ
A M P
$\omega_z$

FIG. 11

EP 0 486 996 B1

FIG. 12

FIG. 13

EP 0 486 996 B1

FIG. 14